# EUROPÄISCHE PATENTSCHRIFT

(11) **EP 2 185 314 B1**
(45) Veröffentlichungstag und Bekanntmachung des Hinweises auf die Patenterteilung: **04.05.2011**
(21) Anmeldenummer: 08803759.3
(22) Anmeldetag: 05.09.2008
(51) Int. Cl.: B23Q 1/48, B23Q 1/54, B23Q 39/02, B23Q 39/04

(54) **WERKZEUGMASCHINE MIT BEWEGLICHEN WERKSTÜCKSCHLITTEN**
MACHINE TOOL COMPRISING MOVABLE WORKPIECE SLIDES
MACHINE-OUTIL MUNIE DE CHARIOTS POUR PIÈCE DÉPLAÇABLES

(30) Priorität: 07.09.2007 DE 102007044282
(43) Veröffentlichungstag der Anmeldung: 19.05.2010
(73) Patentinhaber: MAG IAS GmbH, 73033 Göppingen (DE)
(72) Erfinder: MEIDAR, Moshe Israel, New York, New York 10022 (US); HORN, Wolfgang, 73035 Göppingen (DE); BAYHA, Thomas, 71706 Markgröningen (DE); WINCKLER, Friedrich, 73527 Schwäbisch Gmünd (DE)
(74) Vertreter: Hoeger, Stellrecht & Partner Patentanwälte
(86) Internationale Anmeldenummer: PCT/EP2008/061790
(87) Internationale Veröffentlichungsnummer: WO 2009/034034

(56) Entgegenhaltungen:
- EP-A- 1 285 721
- WO-A-2004/067223
- WO-A-2005/005098
- DE-A1-102004 019 924
- DE-A1-102004 050 199

## Beschreibung

Die Erfindung betrifft eine Werkzeugmaschine, umfassend ein Maschinengestell, mindestens eine an dem Maschinengestell beweglich gehaltene Werkzeugträgereinrichtung, einen Arbeitsraum, einen ersten Werkstückschlitten, welcher an einer ersten Bahnführungseinrichtung relativ zum Maschinengestell verschieblich ist, einen zweiten Werkstückschlitten, welcher an einer zweiten Bahnführungseinrichtung relativ zum Maschinengestell verschieblich ist, wobei der Arbeitsraum zwischen der ersten Bahnführungseinrichtung und der zweiten Bahnführungseinrichtung angeordnet ist, und eine Verbindungseinrichtung, über welche der erste Werkstückschlitten und der zweite Werkstückschlitten miteinander verbindbar sind.

Aus der EP 0 614 724 B1 ist eine Werkzeugmaschine bekannt, bei welcher ein an einem Maschinengestell angeordneter Werkzeugträger über Schlitten längs einer ersten Achse und längs einer quer zur ersten Achse verlaufenden Achse verfahrbar ist. Ein Werkstückträger ist auf einem in der dritten Achse quer zur ersten und zweiten Richtung verfahrbaren Schlitten gehalten.

Die DE 198 59 363 C2 offenbart einen Wechseltisch für eine Blechbearbeitungsmaschine, insbesondere eine Laserschneidmaschine mit wenigstens zwei nebeneinander angeordneten Teil-Auszügen, die jeweils eine Arbeitsebene aufweisen, wobei die Arbeitsebenen der Teil-Auszüge auf einem gemeinsamen Niveau angeordnet sind, wobei die Teil-Auszüge zwischen einer Arbeitsposition und einer Bestimmungsposition verschiebbar sind, und wobei oberhalb oder unterhalb der Teil-Auszüge ein Großformat-Auszug angeordnet ist, dessen Arbeitsebene parallel zu den Arbeitsebenen der Teil-Auszüge steht und der linear zwischen einer Arbeitsposition und einer Bestimmungsposition verschiebbar ist.

Aus der DE 10 2004 008 457 A1 ist eine Werkzeugmaschine mit mindestens einem beweglichen Schlitten, welcher eine Mehrzahl von Haltern für Werkzeuge und/oder Werkstücke aufweist, bekannt. Der mindestens eine Schlitten weist eine Mehrzahl von getrennten Teilschlitten auf und die relative Lage der Teilschlitten zueinander ist feststellbar einstellbar.

Aus der DE 101 19 175 A1 ist eine Vorrichtung zur Bearbeitung von Werkstücken mit mindestens einem Gestell, an dem wenigstens ein Spindelkopf mit einer Arbeitsspindel in zumindest einer Richtung verstellbar gelagert ist, bekannt. Die Längsachse der Arbeitsspindel ist in einem Bereich von etwa ±50° zur Horizontalebene hängend am Gestell angeordnet.

Aus der WO 2004/067223 A1 ist eine Doppelspindel-Werkzeugmaschine bekannt mit zwei auf mindestens einem z-Schlitten angeordneten WerkstückTrägern zur Aufnahme von Werkstücken.

Der Erfindung liegt die Aufgabe zugrunde, eine Werkzeugmaschine der eingangs genannten Art bereitzustellen, welche umfangreiche Bearbeitungsmöglichkeiten für Werkstücke aufweist.

Diese Aufgabe wird bei der eingangs genannten Werkzeugmaschine erfindungsgemäß dadurch gelöst, dass die Verbindungseinrichtung eine Klemmeinrichtung aufweist, durch welche ein erstes Brückenelement, welches an dem ersten Werkstückschlitten gehalten ist, und ein zweites Brückenelement, welches an dem zweiten Werkstückschlitten gehalten ist, miteinander klemmbar sind, und dass die Verbindungseinrichtung eine Löseeinrichtung zum Lösen einer Klemmverbindung des ersten Brückenelements und des zweiten Brückenelements aufweist.

Es ergeben sich dadurch umfangreiche Bearbeitungsmöglichkeiten. Wenn die Verbindungseinrichtung nicht aktiv ist, dann können beispielsweise der erste Werkstückschlitten und der zweite Werkstückschlitten getrennt verfahren werden. Beispielsweise ist es dadurch möglich, einen schnellen "hauptzeitparallelen" Werkstückwechsel durchzuführen. Während ein Werkstück in dem Arbeitsraum bearbeitet wird, welches an dem einen Werkstückhalter gehalten ist, lässt sich ein neu zu bearbeitendes Werkstück fixiert an dem anderen Werkstückschlitten außerhalb des Arbeitsraums bereithalten.

Durch die Verbindung des ersten Werkstückschlittens und des zweiten Werkstückschlittens mit der Verbindungseinrichtung ist es beispielsweise auch möglich, große Werkstücke (mit Abmessungen näherungsweise bis zur Breite des Arbeitsraums) zu bearbeiten. Beispielsweise ist es auch möglich, mehrere Werkstücke "aufzureihen". Es ist dann beispielsweise möglich, synchron über mehrere Werkzeuge, welche an unterschiedlichen Werkzeugträgereinrichtungen gehalten sind, Werkstücke in dem Arbeitsraum zu bearbeiten, wobei die verbundenen Werkstückschlitten als Werkstückschlittenkombination ansteuerbar sind.

Die Verbindungseinrichtung weist eine Klemmeinrichtung auf, durch welche ein erstes Brückenelement, welches an dem ersten Werkstückschlitten gehalten ist, und ein zweites Brückenelement, welches an dem zweiten Werkstückschlitten gehalten ist, miteinander klemmbar sind. Die Klemmeinrichtung sorgt für die geklemmte Fixierung der beiden Brückenelemente aneinander. Dadurch werden die Werkstückschlitten miteinander verbunden, wobei die Verbindung insbesondere lösbar ist. Die Klemmkraft kann auf unterschiedliche Weise ausgeübt werden, beispielsweise pneumatisch, hydraulisch oder über ein oder mehrere elastische Elemente wie Federelemente.

Die Verbindungseinrichtung weist eine Löseeinrichtung zum Lösen einer Klemmverbindung des ersten Brückenelements und des zweiten Brückenelements auf. Die Löseeinrichtung ist insbesondere eine aktive Einrichtung; durch deren aktive Betätigung beispielsweise über eine Steuerungseinrichtung oder direkt über einen Bediener kann die Klemmung gelöst werden, um beispielsweise eine Neujustierung der Werkstückschlitten in ihrer Verschiebeposition und/oder der Drehposition von Werkstückhaltern zueinander zu ermöglichen.

Günstig ist es, wenn die Verbindungseinrichtung so ausgebildet ist, dass der erste Werkstückschlitten und der zweite Werkstückschlitten auf lösbare Weise verbindbar sind. Dadurch ergeben sich umfangreiche Möglichkeiten, die erfindungsgemäße Werkzeugmaschine zu nutzen.

Günstig ist es, wenn an dem ersten Werkstückschlitten ein erstes Brückenelement angeordnet ist und an dem zweiten Werkstückschlitten ein zweites Brückenelement angeordnet ist und die Brückenelemente durch die Verbindungseinrichtung miteinander verbindbar sind. Insbesondere reichen das erste Brückenelement und das zweite Brückenelement so weit in den Arbeitsraum und sind vorzugsweise mit stirnseitigen Enden unmittelbar benachbart, so dass eine einfache Verbindung erreicht werden kann.

Es ist günstig, wenn das erste Brückenelement und/oder das zweite Brückenelement als Werkstückhalter ausgebildet sind und/oder an dem ersten Brückenelement und/oder dem zweiten Brückenelement ein Werkstückhalter ausgebildet ist. Dadurch lassen sich ein oder mehrere Werkstücke auf einfache Weise fixieren und im Arbeitsraum zur Bearbeitung positionieren.

Weitere Bearbeitungsmöglichkeiten ergeben sich, wenn das erste Brückenelement an dem ersten Werkstückschlitten um eine erste Drehachse drehbar ist und das zweite Brückenelement an dem zweiten Werkstückschlitten um eine zweite Drehachse drehbar ist. Dadurch kann ein Werkstück auch in einer relativen Drehposition noch relativ zu einer oder mehreren Werkzeugträgereinrichtungen positioniert werden. Über die Verbindungseinrichtung lassen sich dann auch die Drehachsen klemmen.

Insbesondere sind die erste Drehachse und die zweite Drehachse durch die Verbindungseinrichtung klemmbar. Dadurch lässt sich ein Werkstückträger bereitstellen, welcher sowohl an dem ersten Werkstückschlitten als auch an dem zweiten Werkstückschlitten gehalten ist, welcher gegenüber einer Verschiebungsbewegung in der z-Richtung geklemmt ist und bezüglich der Drehbewegung bzw. Drehpositionierung geklemmt ist.

Insbesondere sind die erste Drehachse und die zweite Drehachse quer zu einer Verschiebungsrichtung des ersten Werkstückschlittens und/oder des zweiten Werkstückschlittens orientiert und vorzugsweise senkrecht orientiert.

Es ist ferner günstig, wenn die erste Drehachse und die zweite Drehachse bezogen auf die Schwerkraftrichtung horizontale Richtungen sind. Es lässt sich dadurch eine einfache Drehbarkeit eines Werkstücks im Arbeitsraum realisieren.

Günstig ist es, wenn dem ersten Werkstückschlitten ein erster Antrieb und dem zweiten Werkstückschlitten ein eigener zweiter Antrieb zugeordnet ist. Dadurch ergeben sich umfangreiche Einsatzmöglichkeiten für die erfindungsgemäße Werkzeugmaschine. Durch eine Steuerungseinrichtung lassen sich, wenn der erste Werkstückschlitten und der zweite Werkstückschlitten geklemmt sind, die Antriebe synchronisieren.

Ganz besonders vorteilhaft ist es, wenn die Verbindungseinrichtung so ausgebildet ist, dass die relative Position des ersten Werkstückschüttens und des zweiten Werkstückschlittens parallel zur Verschiebungsrichtung und/oder ein relativer Winkel zwischen einem ersten Brückenelement, weiches an dem ersten Werkstückschlitten gehalten ist, und einem zweiten Brückenelement, welches an dem zweiten Werkstückschlitten gehalten ist, einstellbar ist. Dadurch lässt sich eine z-Kompensation und auch eine Drehwinkelkompensation erreichen. Es ist dadurch beispielsweise möglich, unterschiedliche Werkzeugabnutzungen zu berücksichtigen, wenn eine erste Werkzeugträgereinrichtung und eine zweite Werkzeugträgereinrichtung zur gleichzeitigen Bearbeitung eines oder mehrerer Werkstück eingesetzt werden. Eine typische Größenordnung für die Einstellung einer relativen Differenzposition (in der z-Richtung bezogen auf das Maschinengestell) liegt bei ca. ± 3 mm.

Bei einer Ausführungsform weist die Verbindungseinrichtung mindestens ein bewegliches Stiftelement auf, welches in eine zugeordnete Aufnahme eingetaucht ist. Das Stiftelement ist dabei an einem Brückenelement angeordnet und die Aufnahme an einem anderen Brückenelement. Das Stiftelement ist insbesondere linearbeweglich.

Durch das mindestens eine Stiftelement sind ein erstes Brückenelement des ersten Werkstückschlittens und ein zweites Brückenelement des zweiten Werkstückschlittens miteinander klemmbar. Dadurch lässt sich ein Werkstückträger bereitstellen, welcher eine Kombination des ersten Brückenelements und des zweiten Brückenelements ist.

Günstig ist es, wenn dem mindestens einen Stiftelement eine Federeinrichtung (mit mindestens einer Feder) zur Herstellung einer Klemmverbindung zugeordnet ist. Um die Klemmung zu erhalten, muss eine bestimmte Kraft aufgewandt werden. Diese kann beispielsweise elektrisch oder pneumatisch oder hydraulisch erzeugt sein. Durch eine Klemmung über Federkraft lässt sich die Verbindungseinrichtung auf einfache Weise ausbilden.

Bei einer Ausführungsform ist eine Druckbeaufschlagungseinrichtung zum Drücken des mindestens einen Stiftelements entgegen einer Klemmrichtung vorgesehen. Durch eine Druckbeaufschlagungseinrichtung kann aktiv einer Klemmkraft entgegengewirkt werden und damit eine Klemmverbindung gelöst werden. Dadurch ist auf einfache Weise eine relative Neueinstellung des ersten Werkstückschlittens und des zweiten Werkstückschlittens bezüglich ihrer z-Position und/oder eine Neueinstellung der Drehposition des ersten Brückenelements und des zweiten Brückenelements möglich.

Insbesondere ist dann an dem mindestens einen Stiftelement ein Kolben angeordnet. Durch Druckbeaufschlagung des Kolbens lässt sich beispielsweise eine einer Klemmkraft entgegenwirkende Lösekraft erzeugen.

Bei einem Ausführungsbeispiel sitzt die Federeinrichtung zwischen dem Kolben und einer Anlagefläche, relativ zu welcher das mindestens eine Stiftelement beweglich ist. Die Anlagefläche ist eine Stützfläche für die mindestens eine Feder. Es lässt sich dadurch erreichen, dass das erste Brückenelement und das zweite Brückenelement über die Federkraft aneinandergedrückt werden, d. h. aufeinander zu gezogen werden. Durch Druckbeaufschlagung des Kolbens entgegen der Kraftrichtung der Feder lässt sich die Klemmung auf einfache Weise lösen.

Es ist dann günstig, wenn das mindestens eine Stiftelement an einem Eintauchbereich in die zugeordnete Aufnahme einen geringeren Außendurchmesser als der Innendurchmesser der Aufnahme aufweist, wobei die relative Differenz eine Einstellbarkeit der relativen Position des ersten Werkstückschlittens und des zweiten Werkstückschlittens in der Verschiebungsrichtung und/oder die Einstellung einer relativen Winkelposition erlaubt. Dadurch lässt sich auf einfache Weise ein Spiel vor der Klemmung erreichen, welches eine relative Einstellbarkeit ermöglicht.

Günstig ist es, wenn an dem mindestens einen Stiftelement ein Beaufschlagungselement zur Klemmung des ersten Werkstückschlittens und des zweiten Werkstückschlittens sitzt. Dieses Beaufschlagungselement kann auf eine entsprechende Anlagefläche wirken, um auf einfache Weise eine geklemmte Verbindung zu erreichen. Wenn das Beaufschlagungselement mit entsprechendem Spiel angeordnet ist, lässt sich die relative Position des ersten Werkstückschlittens und des zweiten Werkstückschlittens in der Verschiebungsrichtung bzw. eine relative Winkelposition von Brückenelementen einstellen.

Es kann dabei vorgesehen sein, dass das mindestens eine Stiftelement über eine Einrichtung an einem Brückenelement abgestützt ist, welche bei der Ausrichtung des ersten Brückenelements und des zweiten Brückenelements über Einschränkung des Spiels die Genauigkeit der Einstellung verbessert. Beispielsweise ist eine solche Einrichtung ein Kugelkissen. Dieses hat bei geklemmtem Stiftelement grundsätzlich keine Wirkung. Wenn die Klemmung aufgehoben ist, dann wird eine mindestens näherungsweise spielfreie Beweglichkeit erlaubt, um eine gute Einstellbarkeit zu realisieren.

Es ist grundsätzlich auch möglich, dass das mindestens eine Stiftelement über eine Friktionseinrichtung beweglich in einer entsprechenden Ausnehmung gelagert ist. Die Friktionseinrichtung erlaubt eine Ausrichtung, wobei bei der Ausrichtung eine Abstützung erfolgt, welche eine mindestens näherungsweise Spielfreiheit realisiert.

Günstig ist es, wenn das Maschinengestell an einem Maschinenbett angeordnet ist.

Insbesondere sind die erste Bahnführungseinrichtung und die zweite Bahnführungseinrichtung an dem Maschinenbett angeordnet, an welchem weiterhin ein Maschinengestell beispielsweise in Form eines Ständers oder Portals angeordnet ist.

Günstig ist es, wenn die mindestens eine Werkzeugträgereinrichtung mindestens in einer ersten Richtung in einer zur ersten Richtung senkrecht orientierten zweiten Richtung am Maschinengestell beweglich ist. Insbesondere ist eine x-y-Beweglichkeit an dem Maschinengestell realisiert. Es ergeben sich dadurch umfangreiche Werkstückbearbeitungsmöglichkeiten.

Es ist dann ferner günstig, wenn die erste Richtung eine bezogen auf die Schwerkraftrichtung horizontale Richtung ist und die zweite Richtung eine bezogen auf die Schwerkraftrichtung vertikale Richtung.

Bei einer Ausführungsform sind an dem Maschinengestell eine erste Werkzeugträgereinrichtung und eine zweite Werkzeugträgereinrichtung beweglich angeordnet. Es lassen sich dadurch gleichzeitig zwei Werkstücke bearbeiten bzw. ein Werkstück lässt sich an zwei unterschiedlichen Bereichen gleichzeitig bearbeiten. Es ergibt sich dadurch eine höhere Werkstückdurchsatzrate.

Insbesondere ist die erste Werkzeugträgereinrichtung dem ersten Werkstückschlitten zugeordnet und die zweite Werkzeugträgereinrichtung dem zweiten Werkstückschlitten zugeordnet. Dadurch lassen sich auch die Verfahrwege der Werkzeugträgereinrichtung bei der Werkstückbearbeitung minimieren.

Die nachfolgende Beschreibung bevorzugter Ausführungsformen dient im Zusammenhang mit den Zeichnungen der näheren Erläuterung der Erfindung. Es zeigen:
- Figur 1: eine perspektivische (Teil-)Darstellung eines Ausführungs- beispiels einer erfindungsgemäßen Werkzeugmaschine;
- Figur 2: eine Teildarstellung der Werkzeugmaschine gemäß Figur 1;
- Figur 3: eine weitere Teildarstellung der Werkzeugmaschine gemäß Figur 1 (Draufsicht);
- Figur 4: eine Teil-Seitenansicht der Werkzeugmaschine gemäß Figur 1;
- Figur 5: eine perspektivische Darstellung eines Ausführungsbeispiels eines Brückenelements;

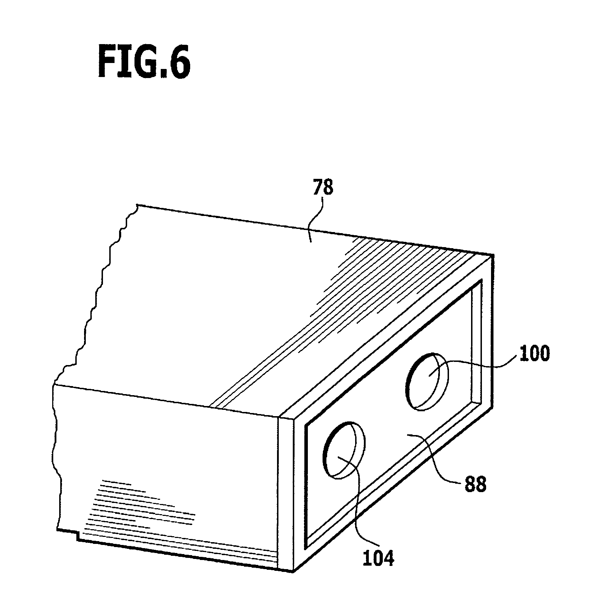

- Figur 6: ein Ausschnitt eines anderen Brückenelements;
- Figur 7: eine Schnittansicht eines Ausführungsbeispiels einer Verbin- dungseinrichtung;
- Figur 8: eine Schnittansicht eines weiteren Ausführungsbeispiels einer Verbindungseinrichtung; und
- Figur 9: eine Schnittansicht eines weiteren Ausführungsbeispiels einer Verbindungseinrichtung.

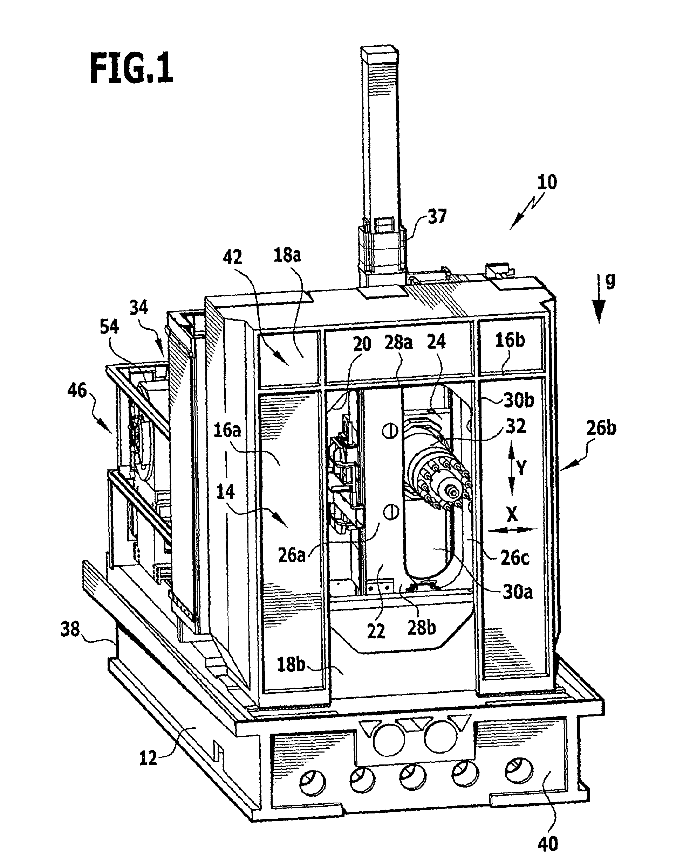

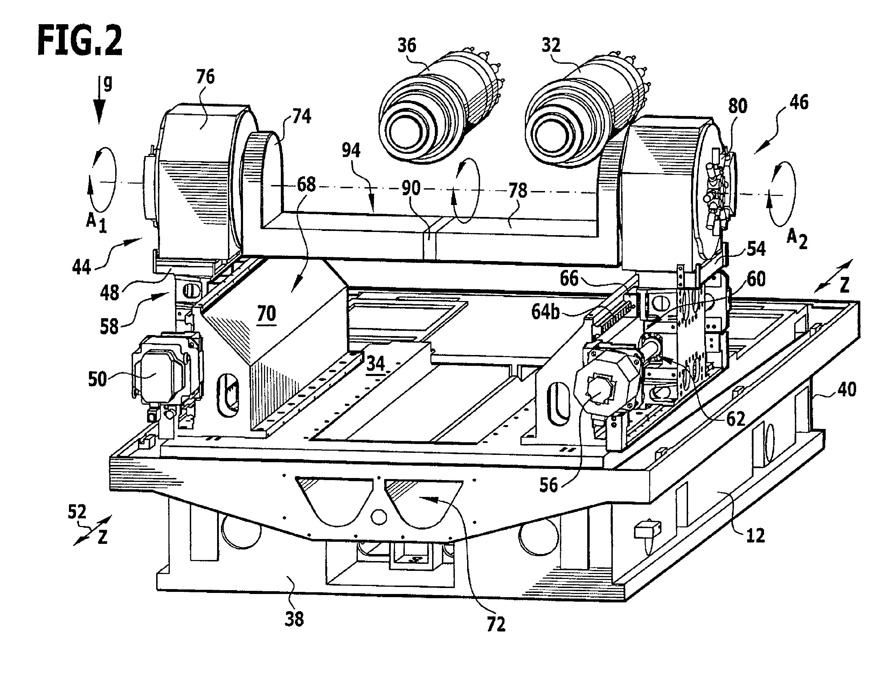

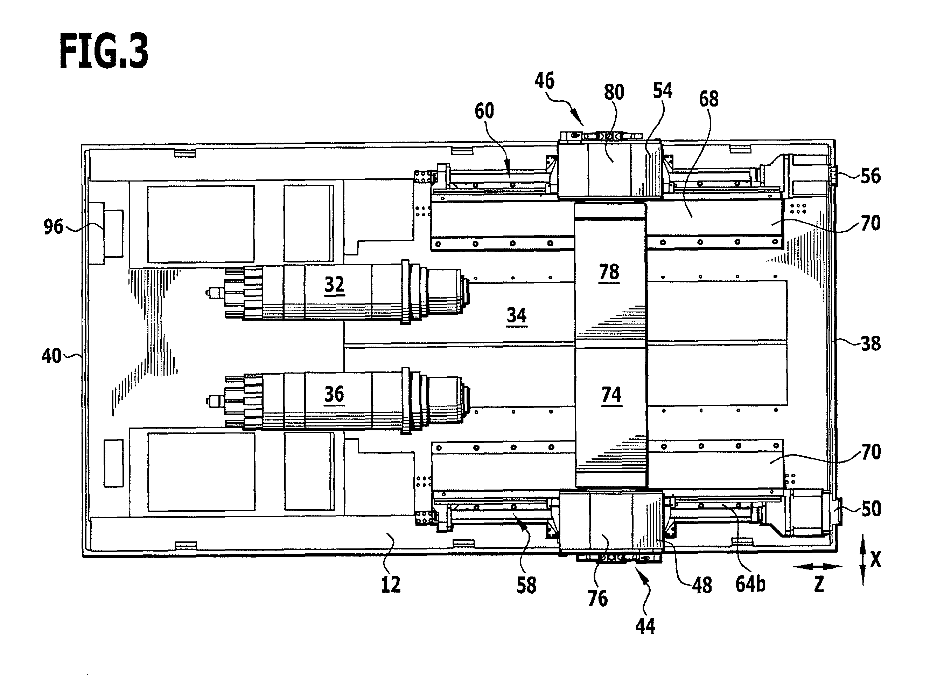

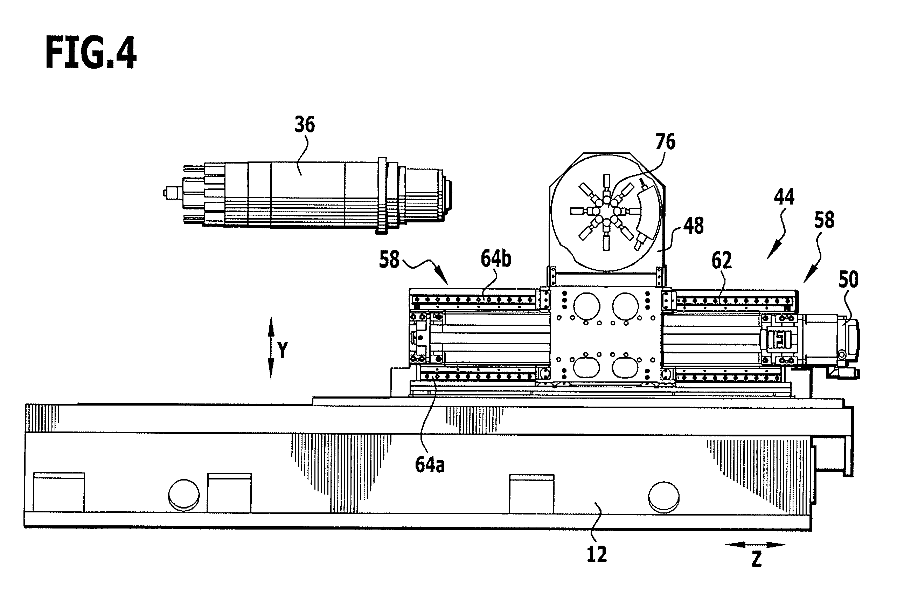

Ein Ausführungsbeispiel einer erfindungsgemäßen Werkzeugmaschine, welche in Figur 1 (ohne Arbeitsraumverkleidung) gezeigt und dort mit 10 bezeichnet ist und welche in Teildarstellungen in den Figuren 2 bis 4 gezeigt ist, umfasst ein Maschinenbett 12. Das Maschinenbett 12 hat eine im Wesentlichen quaderförmige Hüllfläche. Über das Maschinenbett 12 ist die Werkzeugmaschine 10 auf einer Unterlage aufgestellt.

Die Werkzeugmaschine 10 ist beispielsweise ein Bearbeitungszentrum und dient zur spanabhebenden Bearbeitung von metallischen Werkstücken.

An dem Maschinenbett 12 ist ein Maschinengestell 14 angeordnet, welches in Form eines Ständers oder Portals ausgebildet ist. Das Maschinengestell 14 weist beabstandete Schenkel 16a, 16b auf, welche parallel zueinander orientiert sind und insbesondere in vertikaler Richtung (parallel zur Schwerkraftrichtung) orientiert sind. Die Schenkel 16a, 16b sind durch einen oberen Verbindungssteg 18a und durch einen unteren Verbindungssteg 18b verbunden. Der untere Verbindungssteg 18b ist dem Maschinenbett 12 zugewandt bzw. an diesem fixiert.

Zwischen den Schenkeln 16a und 16b sowie den Verbindungsstegen 18a und 18b ist eine durchgehende Öffnung 20 gebildet. In dieser Öffnung 20 ist ein (Werkzeugträger-)Schlitten 22 (erster Schlitten 22) geführt. Es ist dabei eine erste Führungseinrichtung an dem oberen Verbindungssteg 18a und eine zweite Führungseinrichtung an dem unteren Verbindungssteg 18b angeordnet. Das Maschinengestell 14 bildet einen Schlittenträger für den ersten Schlitten 22. Dieser ist an dem Maschinengestell 14 in einer Richtung/Gegenrichtung x beweglich. Diese x-Richtung ist vorzugsweise eine horizontale Richtung bezogen auf die Schwerkraftrichtung.

Der erste Schlitten 22 ist durch einen Antrieb in seiner Verschiebungsbewegung angetrieben. Bei diesem Antrieb kann es sich beispielsweise um einen Kugelgewindeantrieb oder Linearmotorantrieb handeln.

An dem ersten Schlitten 22 ist ein zweiter Schlitten 24 verschieblich geführt. Eine Verschiebungsrichtung des zweiten Schlittens 24 an dem ersten Schlitten 22, welcher dadurch einen Schlittenträger für den zweiten Schlitten 24 bildet, ist senkrecht zur x-Richtung. Die entsprechende y-Richtung ist eine bezogen auf die Schwerkraftrichtung vertikale Richtung (in Figur 1 nicht sichtbar). Der erste Schlitten 22 ist (doppel-)jochartig ausgebildet mit einem äußeren ersten Schenkel 26a und einem beabstandeten äußeren zweiten Schenkel 26b und einem mittleren dritten Schenkel 26c, welcher zwischen dem ersten Schenkel 26a und dem zweiten Schenkel 26b liegt. Der erste Schenkel 26a, der zweite Schenkel 26b und der dritte Schenkel 26c sind parallel zueinander ausgerichtet und dabei in vertikaler Richtung orientiert. Sie sind jeweils durch einen oberen Verbindungssteg 28a und einen unteren Verbindungssteg 28b miteinander verbunden.

Zwischen dem ersten Schenkel 26a und dem dritten Schenkel 26b sowie dem oberen Verbindungssteg 28a und dem unteren Verbindungssteg 28b ist eine durchgehende erste Öffnung 30a gebildet. Durch diese Öffnung 30a ist ein Teilbereich einer ersten Werkzeugträgereinrichtung 32 durchgetaucht. Die erste Werkzeugträgereinrichtung 32 umfasst insbesondere eine Werkzeugspindel, welche ein oder mehrere insbesondere rotierbare Werkzeuge hält, wobei über ein Werkzeug in einem Arbeitsraum 34 Werkstücke bearbeitbar sind.

Zwischen dem dritten Schenkel 26b und dem zweiten Schenkel 26c sowie dem oberen Verbindungssteg 28a und dem unteren Verbindungssteg 28b ist eine durchgehende zweite Öffnung 30b ausgebildet (in Figur 1 nicht sichtbar). Durch diese Öffnung 30b ist ein Teilbereich einer zweiten Werkzeugträgereinrichtung 36 durchgetaucht. Die zweite Werkzeugträgereinrichtung umfasst insbesondere eine Werkzeugspindel, welche parallel zu der Werkzeugspindel der ersten Werkzeugträgereinrichtung 32 orientiert ist. An der zweiten Werkzeugträgereinrichtung 36 sind ein oder mehrere rotierbare Werkzeuge gehalten, über welche in dem Arbeitsraum 34 Werkstücke bearbeitbar sind.

Es ist dabei möglich, dass über die erste Werkzeugträgereinrichtung 32 und die zweite Werkzeugträgereinrichtung 36 gleichzeitig ein Werkstück in dem Arbeitsraum 34 bearbeitet wird oder dass gleichzeitig mehrere Werkstücke in dem Arbeitsraum 34 bearbeitet werden.

Der zweite Schlitten 24 ist in seiner Verschiebungsbewegung in der y-Richtung durch einen Antrieb 37 angetrieben. Bei dem Antrieb 37 handelt es sich beispielsweise um einen Kugelgewindeantrieb oder um einen Linearmotorantrieb.

Die erste Werkzeugträgereinrichtung 32 und die zweite Werkzeugträgereinrichtung 36 sind an demselben Schlitten (zweiter Schlitten) 24 angeordnet. Es ist grundsätzlich auch möglich, dass der ersten Werkzeugträgereinrichtung 32 und der zweiten Werkzeugträgereinrichtung 36 jeweils eigene Schlitteneinrichtungen mit jeweils einem ersten Schlitten für die x-Beweglichkeit und einem zweiten Schlitten für die y-Beweglichkeit zugeordnet sind (in der Zeichnung nicht gezeigt).

Es ist grundsätzlich auch möglich, dass an dem zweiten Schlitten 24 ein Schlitten für eine z-Beweglichkeit der ersten Werkzeugträgereinrichtung 32 und/oder der zweiten Werkzeugträgereinrichtung 36 angeordnet ist. Die z-Richtung liegt dabei senkrecht zur x-Richtung und senkrecht zur y-Richtung.

Ein Maschinenaufbau, bei dem eine oder mehrere Werkzeugträgereinrichtungen an einem Schlitten (dem zweiten Schlitten 24) gehalten sind, welcher insbesondere jochförmig ausgebildet ist, wobei der Schlittenträger selber ein Schlitten ist (der erste Schlitten 22), welcher verschieblich ist, wird auch als Box-in-Box-Konzept bezeichnet. Dieses ist in der EP 0 614 724 B1 beschrieben, auf die ausdrücklich Bezug genommen wird.

Die Werkzeugmaschine 10 weist ein Vorderende 38 und ein Hinterende 40 auf. Das Maschinengestell ist sowohl beabstandet zum Vorderende 38 als auch beabstandet zum Hinterende 40 an dem Maschinenbett 12 angeordnet. Zwischen dem Maschinengestell 14 und dem Hinterende 40 kann an dem Maschinengestell 14 eine Verkleidung 42 angeordnet sein. Eine Steuerungseinrichtung für die Werkzeugmaschine 10 kann in diesem Bereich angeordnet sein.

Der Arbeitsraum 34 liegt zwischen dem Vorderende 38 und dem Maschinengestell 12.

Die Werkzeugmaschine 10 umfasst eine erste Werkstückträgereinrichtung 44 und eine zweite Werkstückträgereinrichtung 46. Die erste Werkstückträgereinrichtung 44 weist einen ersten Werkstückschlitten 48 auf, welchem ein eigener erster Antrieb 50 zugeordnet ist. Der erste Antrieb 50 ist dabei beispielsweise ein Kugelgewindeantrieb oder ein Linearmotorantrieb.

Über den ersten Antrieb 50 ist der erste Werkstückschlitten 48 in einer Verschiebungsrichtung 52 verschieblich. Diese Verschiebungsrichtung 52 (z-Richtung) liegt senkrecht zur x-Richtung und zur y-Richtung. Der erste Werkstückschlitten 48 und damit ein an ihm gehaltenes Werkstück ist in der z-Richtung relativ zum Maschinengestell 14 verschieblich.

Die zweite Werkstückträgereinrichtung 46 weist entsprechend einen zweiten Werkstückschlitten 54 auf, dem ein eigener zweiter Antrieb 56 zugeordnet ist. Der zweite Antrieb 56 ist beispielsweise ein Kugelgewindeantrieb oder ein Linearmotorantrieb. Die Verschiebungsrichtung des zweiten Werkstückschlittens 54 ist parallel zur Verschiebungsrichtung 52 und damit ebenfalls eine z-Richtung.

Die erste Werkstückträgereinrichtung 44 und die zweite Werkstückträgereinrichtung 46 sind in der x-Richtung beabstandet zueinander. Der Arbeitsraum 34 liegt zwischen der ersten Werkstückträgereinrichtung 44 und der zweiten Werkstückträgereinrichtung 46.

Der erste Werkstückschlitten 48 ist an einer als Ganzes mit 58 bezeichneten ersten Bahnführungseinrichtung verschieblich geführt. Entsprechend ist der zweite Werkstückschlitten 54 an einer zweiten Bahnführungseinrichtung 60 verschieblich geführt. Die erste Bahnführungseinrichtung 58 und die zweite Bahnführungseinrichtung 60 sind vorzugsweise im Wesentlichen parallel zueinander orientiert und reichen von dem Vorderende 38 oder von einem Bereich in der Nähe des Vorderendes 38 zu dem Maschinengestell 14.

Die erste Bahnführungseinrichtung 58 und die zweite Bahnführungseinrichtung 60 sind an dem Maschinenbett 12 angeordnet. Sie begrenzen den Arbeitsraum 34 seitlich.

Die jeweilige Führungseinrichtung 62 der ersten Werkstückträgereinrichtung 44 und der zweiten Werkstückträgereinrichtung 46 umfasst beispielsweise eine untere Führungsleiste 64a und eine obere Führungsleiste 64b, an welchen der zugeordnete Werkstückschlitten 48 oder 54 über entsprechende Führungsschuhe 66 geführt (und gehalten) ist.

Die Führungseinrichtung 62 mit ihrer unteren Führungsleiste 64a und ihrer oberen Führungsleiste 64b ist mit einer Abdeckung 68 zu dem Arbeitsraum hin abgedeckt. Die Abdeckung 68 umfasst dabei eine Schrägfläche 70, welche sind in z-Richtung erstreckt und in einem spitzen Winkel zu der x-Richtung angeordnet ist. Die Abdeckungen 68 der ersten Werkstückträgereinrichtung 44 und der zweiten Werkstückträgereinrichtung 46 sind dabei beabstandet zueinander.

Über die Schrägfläche 70 können Bearbeitungsabfälle und insbesondere Bearbeitungsspäne einer Späneabführeinrichtung 72, welche am Maschinenbett 12 angeordnet ist, zugeführt werden.

Oberhalb der oberen Führungsleiste 64a sind die Bahnführungseinrichtungen 58 und 60 gegenüber dem Arbeitsraum 34 durch bewegliche Abdeckungen (Schieber) abgedeckt (in den Zeichnungen nicht gezeigt). Es ist dabei jeweils ein erster Schieber vorgesehen, welcher auf einer Seite des ersten Werkstückschlittens 48 und an einem ersten Endbereich der zugeordneten Bahnführungseinrichtung 58 bzw. 60 fixiert ist; weiterhin ist ein zweiter Schieber vorgesehen, welcher an einem gegenüberliegenden Bereich des jeweiligen Werkstückschlittens 48 bzw. 54 fixiert ist und an einem anderen Endbereich der zugeordneten Bahnführungseinrichtung 58 bzw. 60. Die jeweiligen Schieber sind beispielsweise faltenbalgartig oder als Lamelleneinrichtung oder als Gliederschürze oder als Rollos ausgebildet; die zugeordnete Bahnführungseinrichtung 58 bzw. 60 ist bei jeder Stellung des Werkstückschlittens 48 bzw. 54 zu dem Arbeitsraum abgedeckt.

Ferner ist dem Arbeitsraum 34 eine Arbeitsraumverkleidung zur Kapselung des Arbeitsraums 34 gegenüber dem Außenraum zugeordnet (in der Zeichnung nicht gezeigt).

An dem ersten Werkstückschlitten 48 ist ein erstes Brückenelement 74 angeordnet. Das erste Brückenelement 74 ist drehbar um eine Rotationsachse A₁ an dem ersten Werkstückschlitten 48 angeordnet. Das erste Brückenelement 74 dient als Werkstückhalter für ein oder mehrere zu bearbeitende Werkstücke. Im Querschnitt ist es beispielsweise L-förmig.

An dem ersten Werkstückschlitten 48 ist ein erster Drehantrieb 76 angeordnet, um das erste Brückenelement 74 um die Drehachse A₁ drehen zu können.

Das erste Brückenelement 74 ragt in den Arbeitsraum 34 hinein.

An dem zweiten Werkstückschlitten 54 ist in den Arbeitsraum weisend ein zweites Brückenelement 78 angeordnet, welches ebenfalls einen L-förmigen Querschnitt hat. Es ist über einen an dem zweiten Werkstückschlitten 54 angeordneten zweiten Drehantrieb 80 um eine Drehachse A₂, welche parallel zur Drehachse A₁ ist, drehbar.

Auch das zweite Brückenelement 78 ist als Werkstückhalter ausgebildet bzw. an ihm ist ein Werkstückhalter fixierbar.

Die Achsen A₁ und A₂ sind bezogen auf die Schwerkraftrichtung g horizontale Achsen. Sie sind quer und insbesondere senkrecht zur z-Richtung und parallel zur x-Richtung ausgerichtet.

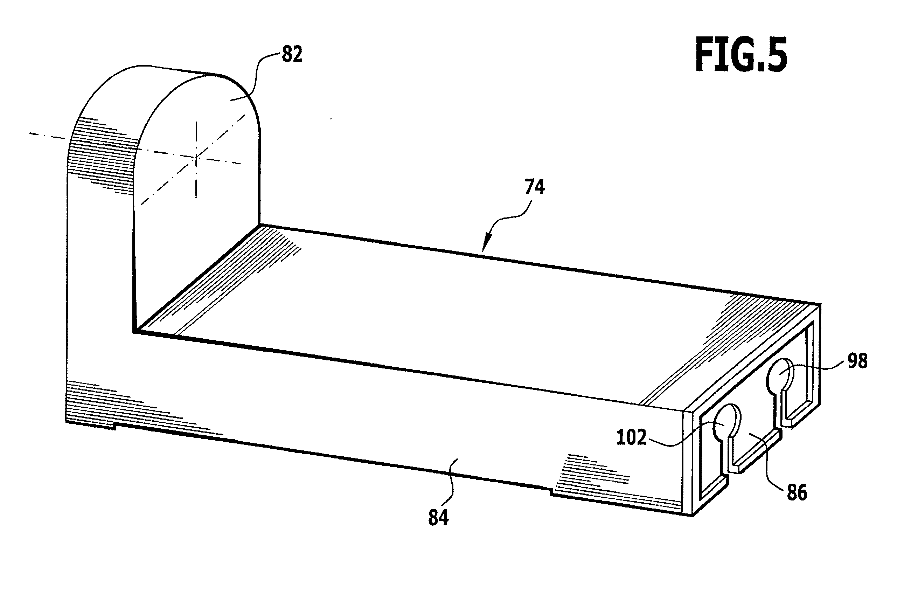

Das erste Brückenelement 74 und das zweite Brückenelement 78 weist jeweils einen Fixierungsbereich 82 auf (Figur 5), über welchen es an dem zugehörigen Werkstückschlitten 48 bzw. 54 drehbar gehalten ist. An dem Fixierungsbereich 82 ist ein beispielsweise quaderförmiger Bereich 84 angeordnet, welcher sich parallel zur Drehachse A₁ bzw. A₂ erstreckt.

Das erste Brückenelement 74 weist ein stirnseitiges Ende 86 auf, welches einem stirnseitigen Ende 88 des zweiten Brückenelements 78 zuweist. Das stirnseitige Ende 86 des ersten Brückenelements 74 und das stirnseitige Ende 88 des zweiten Brückenelements 78 sind beabstandet zueinander, so dass der erste Werkstückschlitten 48 und der zweite Werkstückschlitten 54 aneinander vorbeibewegt werden können bzw. relativ zueinander positioniert werden können, ohne dass die Brückenelemente 74 und 78 aneinander stoßen. Ein Zwischenraum zwischen den stirnseitigen Enden 86 und 88 kann dabei (nach Ausrichtung des ersten Brückenelements 74 und des zweiten Brückenelements 78 relativ zueinander) durch ein Zwischenelement 90 aufgefüllt werden.

Die erfindungsgemäße Werkzeugmaschine 10 umfasst eine Verbindungseinrichtung 92 mit einer oder mehreren Verbindungsstellen, über welche das erste Brückenelement 74 und das zweite Brückenelement 78 miteinander verbindbar und insbesondere miteinander klemmbar sind und damit der erste Werkstückschlitten 48 und der zweite Werkstückschlitten 54 miteinander verbindbar sind. Es wird dadurch ein Werkstückträger 94 bereitgestellt, welcher durch die Kombination des ersten Werkstückschlittens 48 und des zweiten Werkstückschlittens 54 gebildet bzw. gehalten ist. Es können dadurch an dem Werkstückträger 94 auch große Werkstücke, deren Größe beispielsweise in der Größenordnung der Breite des Arbeitsraums 34 liegt, bearbeitet werden bzw. es können mehrere Werkstücke an dem Werkstückträger 94 "aufgereiht" werden, um diese gleichzeitig oder unmittelbar nacheinander (ohne Werkstückwechsel außerhalb des Arbeitsraums) zu bearbeiten.

Die Werkzeugmaschine 10 umfasst dazu eine Steuerungseinrichtung 96, über welche der erste Antrieb 50 zur Linearverschiebung des ersten Werkstückschlittens 48 und der zweite Antrieb 56 zur Linearverschiebung des zweiten Werkstückschlittens 54 synchronisierbar ist und ferner der erste Antrieb 76 und der zweite Antrieb 80 zur Drehung des Werkstückträgers 94 synchronisierbar sind.

Die Verbindungseinrichtung 92 dient zur Verbindung des ersten Brückenelements 74 und des zweiten Brückenelements 78. Dazu ist an dem ersten Brückenelement 74 ein Aufnahmeraum 98 in der Nähe des stirnseitigen Endes 86 angeordnet. Ferner ist ein Aufnahmeraum 100 in dem zweiten Brückenelement 78 in der Nähe des stirnseitigen Endes 88 angeordnet.

Der Aufnahmeraum 98 ist mit dem stirnseitigen Ende 86 über mindestens eine Öffnung 102 verbunden. Bei dem gezeigten Ausführungsbeispiel gemäß Figur 5 sind zwei Öffnungen 102 vorhanden. Es können auch mehrere vorhanden sein.

Es ist dabei grundsätzlich möglich, dass bei einer Mehrzahl von Öffnungen 102 jeder Öffnung ein eigener Aufnahmeraum zugeordnet ist oder ein Aufnahmeraum mehrere Öffnungen zu dem stirnseitigen Ende 86 aufweist.

Der Aufnahmeraum 100 des zweiten Brückenelements 78 weist ebenfalls (mindestens) eine Öffnung 104 in Richtung seines stirnseitigen Endes 88 auf. Die Anzahl der Öffnungen 104 entspricht dabei der Anzahl der Öffnungen 102. Die Öffnungen 102 und 104 sind, wenn das erste Brückenelement 74 und das zweite Brückenelement 78 über die Verbindungseinrichtung 92 verbunden sind, mindestens näherungsweise (wie unten noch erläutert wird) fluchtend ausgerichtet.

In dem Aufnahmeraum 98 ist eine Klemmeinrichtung 105 als Mechanismus für die Klemmung des ersten Brückenelements 74 mit dem zweiten Brückenelement 78 angeordnet. Dieser Mechanismus umfasst pro Öffnung 102 ein (bewegliches) Stiftelement 106, welches durch die jeweilige Öffnung 102 durchgetaucht ist und in die Öffnung 104 eingetaucht ist. Die Öffnung 104 (eventuell gemeinsam mit dem Aufnahmeraum 100) bildet eine Aufnahme für das Stiftelement 106. An einem Ende des Stiftelements 106, welches in dem Aufnahmeraum 100 liegt, ist ein Beaufschlagungselement 108 angeordnet. Dieses Beaufschlagungselement 108 ist an einer Hülse 110 verschieblich geführt. Die Hülse 110 ist in den Aufnahmeraum 100 und die Öffnung 104 fest eingesetzt. Eine Verschiebungsrichtung 112 des Beaufschlagungselements 108 relativ zum zweiten Brückenelement 78 an der Hülse 110 ist senkrecht zur z-Richtung.

Die Hülse 110 weist eine Anlagefläche 114 für das Beaufschlagungselement 108 auf. An der Hülse 110 ist eine beispielsweise ringförmige elastische Dichtung 116 angeordnet, an welcher das Beaufschlagungselement 108 geführt ist.

Durch das Stiftelement 106 kann das Beaufschlagungselement 108 an die Anlagefläche 114 gepresst werden, um dadurch das erste Brückenelement 74 und das zweite Brückenelement 78 miteinander zu verklemmen und eine Brückenelement-Kombination zu bilden. Die Anlagefläche 114 liegt einer Wand 120 des Aufnahmeraums 100 gegenüber.

In dem Aufnahmeraum 98 und die Öffnung 102 umgebend ist ebenfalls eine Hülse 122 angeordnet, welche einen Aufnahmeraum 124 aufweist. In diesem ist ein Kolben 126 angeordnet, an welchem das Stiftelement 106 sitzt. Die erste Kolbenseite 128 begrenzt einen Kolbenraum 130. Die erste Kolbenseite 128 ist dabei von dem zweiten Brückenelement 78 abgewandt. Der Kolbenraum 130 ist durch eine Druckbeaufschlagungseinrichtung 132 druckbeaufschlagbar. Beispielsweise ist er pneumatisch oder hydraulisch mit Druck beaufschlagbar. Dadurch kann eine Kraft auf den Kolben 126 ausgeübt werden, welche in Richtung des zweiten Brückenelements 78 wirkt. Dadurch kann das Stiftelement 106 in Richtung des zweiten Brückenelements 78 verschoben werden und damit das Beaufschlagungselement 108 von der Anlagefläche 114 abheben.

Der Kolben 126 weist eine der ersten Kolbenseite 128 gegenüberliegende zweite Kolbenseite 134 auf, welche dem zweiten Brückenelement 78 zugewandt ist. Zwischen der zweiten Kolbenseite 134 und einer Anlagefläche 136 der Hülse 122 ist (mindestens) eine Federeinrichtung 138 angeordnet, deren Federkraft das Beaufschlagungselement 108 an die Anlagefläche 114 drückt und damit eine Klemmkraft ausübt, welche das erste Brückenelement 74 und das zweite Brückenelement 78 miteinander verklemmt, sofern kein Druck auf den Kolben 126 über die erste Kolbenseite 128 ausgeübt wird. Wenn genügend Druck auf die erste Kolbenseite 128 ausgeübt wird, dann wird der Kolben 126 in Richtung der Anlagefläche 136 gedrückt und dabei das Beaufschlagungselement 108 von der Anlagefläche 114 abgehoben.

Die Federeinrichtung 138 ist beispielsweise eine Tellerfeder oder ein Tellerfedernpaket.

Die Druckbeaufschlagungseinrichtung 132 bildet eine Löseeinrichtung 139 zum Lösen einer Verklemmung des ersten Brückenelements 74 und des zweiten Brückenelements 78. Sie stellt eine Lösekraft bereit, welche entgegen der Klemmkraft der Federeinrichtung 138 wirkt.

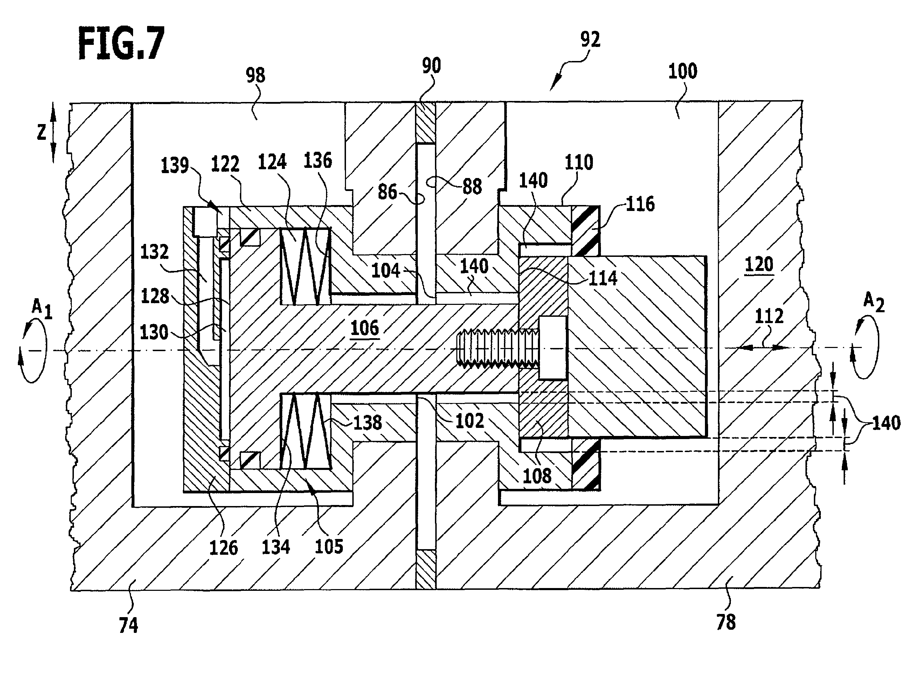

Das Stiftelement 106 und das Beaufschlagungselement 108 sind in der Öffnung 104 und in dem Aufnahmeraum 100 mit Spiel in jeder radialen Richtung zur Verschiebungsrichtung 112 angeordnet. Dieses Spiel ist in Figur 7 mit dem Bezugszeichen 140 angedeutet. Dieses Spiel 140 erlaubt eine unterschiedliche Positionierung des ersten Werkstückschlittens 48 und des zweiten Werkstückschlittens 44 in der z-Richtung relativ zum Maschinengestell 14 sowie eine unterschiedliche Drehstellung des ersten Brückenelements 74 und des zweiten Brückenelements 78, wenn nicht geklemmt ist. Dadurch ist ein Ausgleich möglich. Beispielsweise können dadurch, wenn zwei Werkzeugträgereinrichtungen eingesetzt werden, an denen Werkzeuge beispielsweise nicht gleichmäßig abgenutzt sind, der erste Werkstückschlitten und der zweite Werkstückschlitten relativ zueinander verstellt werden, um dies auszugleichen, d. h. eine Werkzeugabnutzungskompensation zu erzielen. Eine typische Größenordnung für das Spiel 140 (für die maximale Verstellbarkeit) liegt bei ± 3 mm.

Ferner lässt sich, wenn dies gewünscht wird, ein Versatz der Drehachsen A₁ und A₂ einstellen.

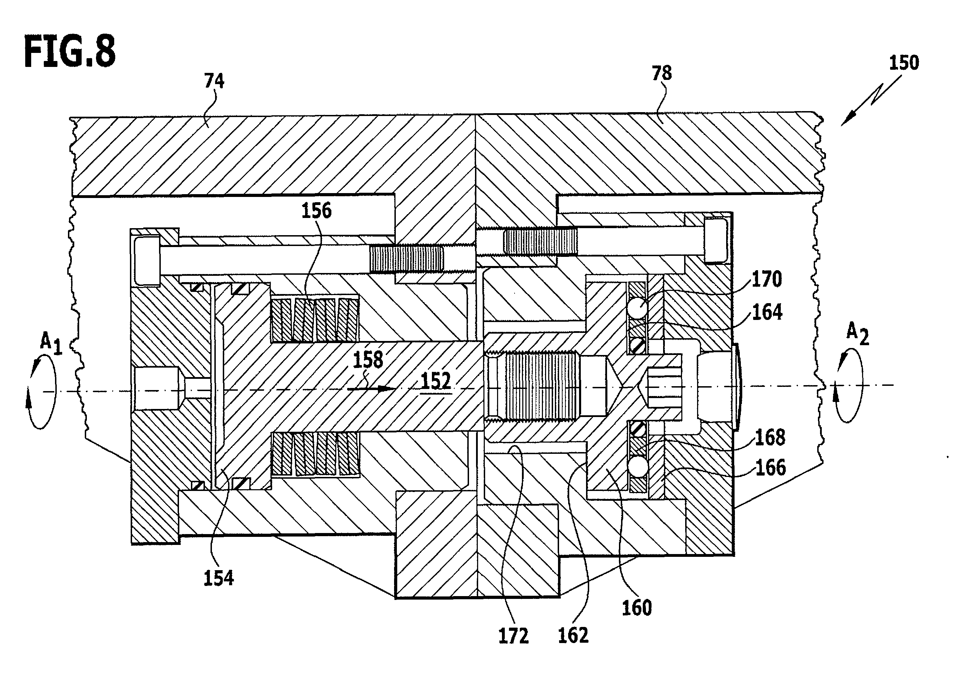

Ein zweites Ausführungsbeispiel einer Verbindungseinrichtung, welche in Figur 8 in einem Teilbereich in einer Schnittdarstellung gezeigt und dort mit 150 bezeichnet ist, umfasst ein Stiftelement 152, mittels welchem wiederum das erste Brückenelement 74 und das zweite Brückenelement 78 miteinander verklemmbar sind.

Das Stiftelement 152 umfasst einen Kolben 154, welcher an dem ersten Brückenelement 74 positioniert ist. An einer Seite, welche dem zweiten Brückenelement 78 zugewandt ist, ist der Kolben 154 über eine Federeinrichtung 156 abgestützt. Die Federeinrichtung 156 ist beispielsweise durch ein Tellerfederpaket gebildet.

An einer gegenüberliegenden Seite ist der Kolben 154 durch ein Fluid und insbesondere pneumatisch beaufschlagbar. Über die entsprechende Fluidbeaufschlagung lässt sich eine Kraftbeaufschlagung in einer Richtung 158 erreichen, welche entgegengesetzt zu der Kraftwirkungsrichtung der Federeinrichtung 156 ist.

Das Stiftelement 152 weist einen verbreiterten Bereich 160 auf, welcher an dem zweiten Brückenelement 78 positioniert ist. Dieser Bereich 160 ist an eine Anlagefläche 162 anlegbar. Durch Kraftwirkung der Federeinrichtung 156 wird der Bereich 160 an die Anlagefläche 162 gepresst und dadurch eine Verklemmung zwischen dem ersten Brückenelement 74 und dem zweiten Brückenelement 78 erreicht.

Die Verbindungseinrichtung 150 funktioniert dabei grundsätzlich gleich wie die Verbindungseinrichtung 92.

Der Bereich 160 weist dem ersten Brückenelement 74 abgewandt eine Rückseite 164 auf. Zwischen der Rückseite 164 und einem Bereich 166, welcher fest mit dem zweiten Brückenelement 78 verbunden ist, ist ein Kugelkissen 168 angeordnet. Dieses Kugelkissen 168 umfasst eine Mehrzahl von drehbar gelagerten Kugeln 170, welche die Rückseite 164 und den Bereich 166 kontaktieren und an diesen abrollen können.

Das Stiftelement 152 ist in einer entsprechenden Ausnehmung 172 des zweiten Brückenelements 78 mit Spiel geführt. Dies ermöglicht eine relative Ausrichtbarkeit zwischen dem ersten Brückenelement 74 und dem zweiten Brückenelement 78, wenn notwendig. Über das Stiftelement 152 ist eine eingestellte relative Position zwischen dem ersten Brückenelement 74 und dem zweiten Brückenelement 78 fixierbar über Verklemmung.

Das Kugelkissen 168 erlaubt bei der Ausrichtung eine im Wesentlichen spielfreie Beweglichkeit des zweiten Brückenelements 78 relativ zu dem Stiftelement 152, um die Ausrichtungsgenauigkeit zu erhöhen.

Dies wiederum erlaubt eine definierte relative Positionierung des ersten Brückenelements 74 und des zweiten Brückenelements 78 mit genauer Einstellbarkeit. Dadurch kann mit hoher Genauigkeit beispielsweise eine Werkzeugabnutzungskompensation durchgeführt werden oder lässt sich ein Versatz von Drehachsen A₁ und A₂ einstellen.

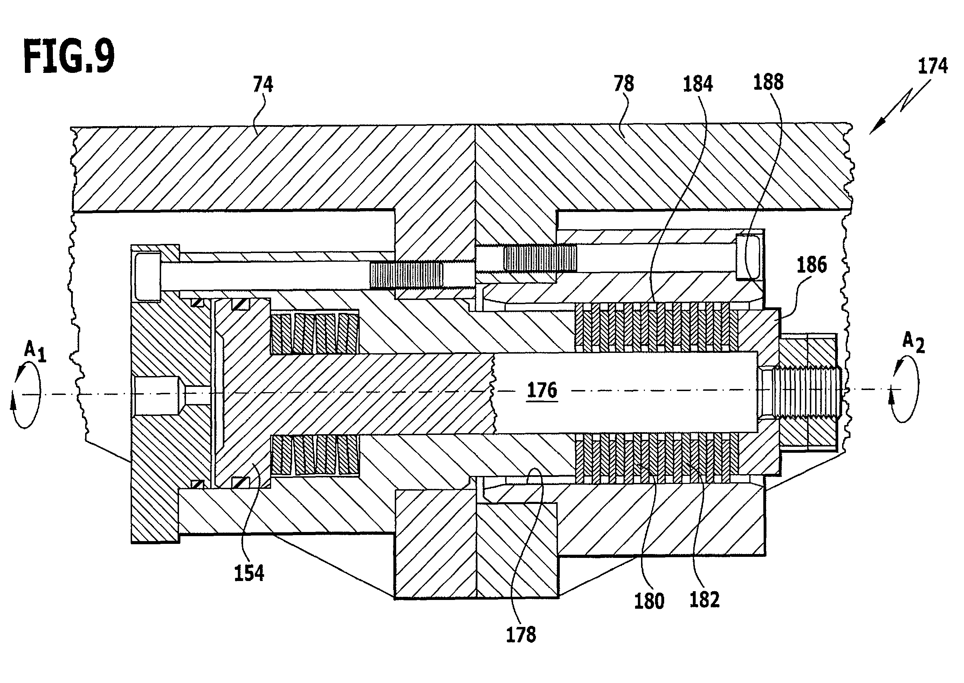

Ein drittes Ausführungsbeispiel einer erfindungsgemäßen Verbindungseinrichtung, welche in Figur 9 in einer Teildarstellung gezeigt und dort mit 174 bezeichnet ist, umfasst ein Stiftelement 176, welches im Bereich des ersten Brückenelements 74 grundsätzlich gleich ausgebildet ist wie das Stiftelement 152.

Das Stiftelement 176 ist in einer Ausnehmung 178 des zweiten Brückenelements 78 mit Spiel angeordnet. Um das Stiftelement 176 ist eine Friktionseinrichtung 180 angeordnet, welche eine Mehrzahl von in einem Paket angeordnete Friktionsscheiben 182 umfasst. Die Friktionsscheiben 182 der Friktionseinrichtung 180 kontaktieren mechanisch eine Wand 184 der Ausnehmung 178. Die Wand 184 ist dabei vorzugsweise zylindrisch ausgebildet.

Benachbarte Friktionsscheiben 182 sind aufeinander angeordnet. Sie sind relativ zueinander verschieblich, wenn eine entsprechende Druckkraft ausgeübt wird. Vorzugsweise haben benachbarte Friktionsscheiben unterschiedliche Durchmesser.

Über die Friktionseinrichtung 180 ist das Stiftelement 176 an der Wand 184 gewissermaßen spielfrei abgestützt, wobei zur Ausrichtung des ersten Brückenelements 74 und des zweiten Brückenelements 78 eine relative Verstellung der beiden Brückenelemente 74 und 78 zueinander möglich ist.

An dem Stiftelement 176 ist ein kopfförmiger Bereich 186 angeordnet, welcher gegen eine Anlagefläche 188 drückbar ist, um eine Verklemmung zu erreichen.

Bei der Verbindungseinrichtung 174 ist das Stiftelement 176 beabstandet zu der Wand 184 in der Ausnehmung 178 positioniert. Über die Friktionseinrichtung 180 erfolgt eine Abstützung an der Wand 184, wobei bei aufgehobener Klemmung (durch entsprechende Druckbeaufschlagung des Stiftelements 176 an einem Kolben, welcher dem Kolben 154 entspricht) eine relative Beweglichkeit des Stiftelements 176 in der Ausnehmung 178 durch Einwirkung auf die Friktionseinrichtung 180 möglich ist.

Ansonsten funktioniert die Verbindungseinrichtung 174 wie die Verbindungseinrichtung 92.

Die erfindungsgemäße Werkzeugmaschine 10 funktioniert wie folgt:

Grundsätzlich ist die Verbindungseinrichtung 92 bzw. 150 bzw. 174 lösbar. Es können dann der erste Werkstückschlitten 48 und der zweite Werkstückschlitten 54 individuell verfahren werden und die entsprechenden Werkzeughalter an dem ersten Werkstückschlitten 48 und an dem zweiten Werkstückschlitten 54 können individuell gedreht werden. Es lässt sich dadurch eine Werkstückbearbeitung in dem Arbeitsraum 34 über eine oder mehrere Werkzeugträgereinrichtungen 32, 36 durchführen.

Durch die Verbindungseinrichtung 92 lassen sich die beiden Werkstückschlitten 48 und 54 miteinander klemmen. Die Brückenelemente 74 und 78 werden durch die Verbindungseinrichtung 92 miteinander verbunden und damit geklemmt. Dadurch können auf dem dadurch bereitgestellten Werkstückträger 94 mehrere Werkstücke aufgereiht werden bzw. ein großes Werkstück kann bearbeitet werden.

Zur Klemmung des ersten Brückenelements 74 und des zweiten Brückenelements 78 werden ein oder mehrere Stiftelemente 106 mit ihren jeweiligen Beaufschlagungselementen 108 von dem einen Brückenelement aus (beispielsweise von dem ersten Brückenelement 74 aus) an eine Anlagefläche 114 des anderen Brückenelements (beispielsweise des zweiten Brückenelements 78) gedrückt. Es ist dadurch eine Klemmung der Drehachsen A₁ und A₂ relativ zueinander erreicht.

Durch das Spiel 140, welches dadurch verursacht ist, dass ein Stiftelement 106 in dem Aufnahmeraum 98 mit Spiel angeordnet ist und/oder mit Spiel in die jeweilige Öffnung 104 eingetaucht ist und das Beaufschlagungselement 108 in dem Aufnahmeraum 100 Spiel hat, lässt sich eine relative Differenzposition zwischen dem ersten Werkstückschlitten 48 und dem zweiten Werkstückschlitten 54 in der z-Richtung einstellen (und über Klemmung fixieren) und es lässt sich eine relative Winkeldifferenzposition bezogen auf die A₁-Drehachse und A₂-Drehachse einstellen (und über Klemmung fixieren).

Dadurch können beispielsweise unterschiedliche Werkzeugabnutzungen von Werkzeugen an der ersten Werkzeugträgereinrichtung 32 und der zweiten Werkzeugträgereinrichtung 36 kompensiert werden.

## Patentansprüche

1. Werkzeugmaschine, umfassend ein Maschinengestell (14), mindestens eine an dem Maschinengestell (14) beweglich gehaltene Werkzeugträgereinrichtung (32; 36), einen Arbeitsraum (34), einen ersten Werkstückschlitten (48), welcher an einer ersten Bahnführungseinrichtung (58) relativ zum Maschinengestell (14) verschieblich ist, einen zweiten Werkstückschlitten (54), welcher an einer zweiten Bahnführungseinrichtung (60) relativ zum Maschinengestell (14) verschieblich ist, wobei der Arbeitsraum (34) zwischen der ersten Bahnführungseinrichtung (58) und der zweiten Bahnführungseinrichtung (60) angeordnet ist, und eine Verbindungseinrichtung (92), über welche der erste Werkstückschlitten (48) und der zweite Werkstückschlitten (54) miteinander verbindbar sind, **dadurch gekennzeichnet, dass** die Verbindungseinrichtung (92; 150; 174) eine Klemmeinrichtung (105) aufweist, durch welche ein erstes Brückenelement (74), welches an dem ersten Werkstückschlitten (48) gehalten ist, und ein zweites Brückenelement (78), welches an dem zweiten Werkstückschlitten (54) gehalten ist, miteinander klemmbar sind, und dass die Verbindungseinrichtung (92; 150; 174) eine Löseeinrichtung (139) zum Lösen einer Klemmverbindung des ersten Brückenelements (74) und des zweiten Brückenelements (78) aufweist.

2. Werkzeugmaschine nach Anspruch 1, **dadurch gekennzeichnet, dass** die Verbindungseinrichtung (92) so ausgebildet ist, dass der erste Werkstückschlitten (48) und der zweite Werkstückschlitten (54) auf lösbare Weise verbindbar sind.

3. Werkzeugmaschine nach Anspruch 1 oder 2, **dadurch gekennzeichnet, dass** das erste Brückenelement (74) und/oder das zweite Brückenelement (78) als Werkstückhalter ausgebildet sind und/oder an dem ersten Brückenelement (74) und/oder dem zweiten Brückenelement (78) ein Werkstückhalter angeordnet ist, und insbesondere, dass das erste Brückenelement (74) an dem ersten Werkstückschlitten (48) um eine erste Drehachse (A₁) drehbar ist und das zweite Brückenelement (78) an dem zweiten Werkstückschlitten (54) um eine zweite Drehachse (A₂) drehbar ist, und insbesondere, dass die erste Drehachse (A₁) und die zweite Drehachse (A₂) durch die Verbindungseinrichtung (92; 150; 174) klemmbar sind, und insbesondere, dass die erste Drehachse (A₁) und die zweite Drehachse (A₂) quer zu einer Verschiebungsrichtung (z) des ersten Werkstückschlittens (48) und/oder des zweiten Werkstückschlittens (54) orientiert sind.

4. Werkzeugmaschine nach einem der vorangehenden Ansprüche, **dadurch gekennzeichnet, dass** dem ersten Werkstückschlitten (48) ein eigener erster Antrieb (50) und dem zweiten Werkstückschlitten (54) ein eigener zweiter Antrieb (56) zugeordnet ist.

5. Werkzeugmaschine nach einem der vorangehenden Ansprüche, **dadurch gekennzeichnet, dass** die Verbindungseinrichtung (92; 150; 174) so ausgebildet ist, dass die relative Position des ersten Werkstückschlittens (48) und des zweiten Werkstückschlittens (54) parallel zur Verschiebungsrichtung (52) einstellbar ist.

6. Werkzeugmaschine nach einem der vorangehenden Ansprüche, **dadurch gekennzeichnet, dass** ein relativer Winkel zwischen dem ersten Brückenelement (74), welches an dem ersten Werkstückschlitten (48) gehalten ist, und dem zweiten Brückenelement (78), welches an dem zweiten Werkstückschlitten (54) gehalten ist, einstellbar ist.

7. Werkzeugmaschine nach einem der vorangehenden Ansprüche, **dadurch gekennzeichnet, dass** die Verbindungseinrichtung (92; 150; 174) mindestens ein bewegliches Stiftelement (106; 152; 176) aufweist, welches in eine zugeordnete Aufnahme (104) eingetaucht ist.

8. Werkzeugmaschine nach Anspruch 7, **dadurch gekennzeichnet, dass** durch das mindestens eine Stiftelement (106; 152; 176) das erste Brückenelement (74) des ersten Werkstückschlittens (48) und das zweite Brückenelement (78) des zweiten Werkstückschlittens (54) miteinander verklemmbar sind.

9. Werkzeugmaschine nach Anspruch 8, **dadurch gekennzeichnet, dass** dem mindestens einen Stiftelement (106; 152; 176) eine Federeinrichtung (138; 156) zur Herstellung einer Klemmverbindung zugeordnet ist.

10. Werkzeugmaschine nach Anspruch 9, **dadurch gekennzeichnet, dass** die Federeinrichtung (138; 156) so angeordnet und ausgebildet ist, dass das erste Brückenelement (74) und das zweite Brückenelement (78) durch das mindestens eine Stiftelement (106; 152; 176) aneinander gepresst werden.

11. Werkzeugmaschine nach einem der Ansprüche 7 bis 10, **gekennzeichnet durch** eine Druckbeaufschlagungseinrichtung (132) zum Drücken des mindestens einen Stiftelements (106; 152; 176) entgegen einer Klemmrichtung.

12. Werkzeugmaschine nach Anspruch 11, **dadurch gekennzeichnet, dass** das mindestens eine Stiftelement (106; 152; 176) an einem Kolben (126; 154) sitzt.

13. Werkzeugmaschine nach Anspruch 12, **dadurch gekennzeichnet, dass** die Federeinrichtung (138; 156) zwischen dem Kolben (126; 154) und einer Anlagefläche (136) sitzt, relativ zu welcher das mindestens eine Stiftelement (106; 152; 176) beweglich ist.

14. Werkzeugmaschine nach einem der Ansprüche 7 bis 13, **dadurch gekennzeichnet, dass** das mindestens eine Stiftelement (106) an einem Eintauchbereich in die zugeordnete Aufnahme (104) einen geringeren Außendurchmesser als der Innendurchmesser der Aufnahme (104) aufweist, wobei die relative Differenz eine Einstellbarkeit der relativen Position des ersten Werkstückschlittens (48) und des zweiten Werkstückschlittens (54) in der Verschiebungsrichtung (z) und/oder die Einstellung einer relativen Winkelposition erlaubt.

15. Werkzeugmaschine nach einem der Ansprüche 7 bis 14, **dadurch gekennzeichnet, dass** an dem mindestens einen Stiftelement (106) ein Beaufschlagungselement (108) zur Klemmung des ersten Werkstückschlittens (48) und des zweiten Werkstückschlittens (54) sitzt.

## Claims

1. Machine tool, comprising a machine frame (14), at least one tool holder device (32; 36) which is held for movement on the machine frame (14), a work space (34), a first workpiece carriage (48) which is displaceable on a first path guiding device (58) relative to the machine frame (14), a second workpiece carriage (54) which is displaceable on a second path guiding device (60) relative to the machine frame (14), the work space (34) being arranged between the first path guiding device (58) and the second path guiding device (60), and a connecting device (92) for connecting the first workpiece carriage and the second workpiece carriage together,
**characterized in that** the connecting device (92; 150; 174) has a clamping device (105) for clamping together a first bridge element (74) held at the first workpiece carriage (48) and a second bridge element (78) held at the second workpiece carriage (54), and **in that** the connecting device (92; 150; 174) has a releasing device (139) for releasing a clamp connection of the first bridge element (74) and the second bridge element (78).

2. Machine tool in accordance with claim 1, **characterized in that** the connecting device (92) is configured such that the first workpiece carriage (48) and the second workpiece carriage (54) are releasably connectable.

3. Machine tool in accordance with claim 1 or 2, **characterized in that** the first bridge element (74) and/or the second bridge element (78) are configured as a workpiece holder, and/or a workpiece holder is arranged at the first bridge element (74) and/or second bridge element (78), and, in particular, **in that** the first bridge element (74) is rotatable about a first axis of rotation (A₁) on the first workpiece carriage (48) and the second bridge element (78) is rotatable about a second axis of rotation (A₂) on the second workpiece carriage (54), and, in particular, **in that** the first axis of rotation (A₁) and the second axis of rotation (A₂) are clampable by means of the connecting device (92; 150; 174), and, in particular, **in that** the first axis of rotation (A₁) and the second axis of rotation (A₂) are oriented transversely to a direction of displacement (z) of the at least one workpiece carriage (48) and/or the second workpiece carriage (54).

4. Machine tool in accordance with any one of the preceding claims, **characterized in that** the first workpiece carriage (48) has a first drive (50) of its own associated with it and the second workpiece carriage (54) has a second drive (56) of its own associated with it.

5. Machine tool in accordance with any one of the preceding claims, **characterized in that** the connecting device (92; 150; 174) is configured such that the relative position of the first workpiece carriage (48) and the second workpiece carriage (54) parallel to the displacement direction (52) is adjustable.

6. Machine tool in accordance with any one of the preceding claims, **characterized in that** a relative angle between the first bridge element (74), which is held at the first workpiece carriage (48), and the second bridge element (78), which is held at the second workpiece carriage (54), is adjustable.

7. Machine tool in accordance with any one of the preceding claims, **characterized in that** the connecting device (92; 150; 174) has at least one movable pin element (106; 152; 176) which is plunged into an associated receptacle (104).

8. Machine tool in accordance with claim 7, **characterized in that** the first bridge element (74) of the first workpiece carriage (48) and the second bridge element (78) of the second workpiece carriage (54) are clampable together by means of the at least one pin element (106; 152; 176).

9. Machine tool in accordance with claim 8, **characterized in that** the at least one pin element (106; 152; 176) has associated with it a spring device (138; 156) for establishing a clamp connection.

10. Machine tool in accordance with claim 9, **characterized in that** the spring device (138; 156) is arranged and configured such that the first bridge element (74) and the second bridge element (78) are pressed against each other by the at least one pin element (106; 152; 176).

11. Machine tool in accordance with any one of claims 7 to 10, **characterized by** a pressure biasing device (132) for urging the at least one pin element (106; 152; 176) against a clamping direction.

12. Machine tool in accordance with claim 11, **characterized in that** the at least one pin element (106; 152; 176) is seated at a piston (126; 154).

13. Machine tool in accordance with claim 12, **characterized in that** the spring device (138; 156) is seated between the piston (126; 154) and a contact face (136) relative to which the at least one pin element (106; 152; 176) is movable.

14. Machine tool in accordance with any one of claims 7 to 13, **characterized in that** the at least one pin element (106), in an area of plunge into the associated receptacle (104), is of smaller outer diameter than the inner diameter of the receptacle (104), the relative difference allowing the relative position of the first workpiece carriage (48) and the second workpiece carriage (54) in the direction of displacement (z) to be adjustable and/or a relative angular position to be adjusted.

15. Machine tool in accordance with any one of claims 7 to 14, **characterized in that** a biasing element (108) for clamping the first workpiece carriage (48) and the second workpiece carriage (54) is seated at the least one pin element (106).

## Revendications

1. Machine-outil, comprenant un bâti de machine (14), au moins un dispositif porte-outil (32 ; 36) maintenu de manière mobile sur le bâti de machine (14), un espace de travail (34), un premier chariot pour pièce (48) qui est mobile sur un premier dispositif de glissière (58) par rapport au bâti de machine (14), un deuxième chariot pour pièce (54) qui est mobile sur un deuxième dispositif de glissière (60) par rapport au bâti de machine (14), l'espace de travail (34) étant disposé entre le premier dispositif de glissière (58) et le deuxième dispositif de glissière (60), et un dispositif de liaison (92) pouvant relier le premier chariot pour pièce (48) au deuxième chariot pour pièce (54), **caractérisée en ce que** le dispositif de liaison (92 ; 150 ; 174) présente un dispositif de serrage (105) pouvant serrer un premier élément de pont (74) qui est maintenu sur le premier chariot pour pièce (48), à un deuxième élément de pont (78) qui est maintenu sur le deuxième chariot pour pièce (54), et **en ce que** le dispositif de liaison (92 ; 150 ; 174) présente un dispositif de détachement (139) pour le détachement d'une liaison par serrage du premier élément de pont (74) avec le deuxième élément de pont (78).

2. Machine-outil selon la revendication 1, **caractérisée en ce que** le dispositif de liaison (92) est réalisé de sorte que le premier chariot pour pièce (48) et le deuxième chariot pour pièce (54) puissent être reliés de manière détachable.

3. Machine-outil selon la revendication 1 ou 2, **caractérisée en ce que** le premier élément de pont (74) et/ou le deuxième élément de pont (78) est réalisé comme un porte-pièce et/ou un porte-pièce est disposé sur le premier élément de pont (74) et/ou sur le deuxième élément de pont (78), et en particulier **en ce que** le premier élément de pont (74) sur le premier chariot pour pièce (48) peut tourner autour d'un premier axe de rotation (A₁) et **en ce que** le deuxième élément de pont (78) sur le deuxième chariot pour pièce (54) peut tourner autour d'un deuxième axe de rotation (A₂), et en particulier **en ce que** le premier axe de rotation (A₁) et le deuxième axe de rotation (A₂) peuvent être serrés par le dispositif de liaison (92 ; 150 ; 174), et en particulier **en ce que** le premier axe de rotation (A₁) et le deuxième axe de rotation (A₂) sont orientés transversalement à un sens de déplacement (z) du premier chariot pour pièce (48) et/ou du deuxième chariot pour pièce (54).

4. Machine-outil selon l'une quelconque des revendications précédentes, **caractérisée en ce qu'**un premier entraînement propre (50) est associé au premier chariot pour pièce (48) et un deuxième entraînement propre (56) est associé au deuxième chariot pour pièce (54).

5. Machine-outil selon l'une quelconque des revendications précédentes, **caractérisée en ce que** le dispositif de liaison (92 ; 150 ; 174) est réalisé de sorte que la position relative du premier chariot pour pièce (48) et du deuxième chariot pour pièce (54) puisse être réglée parallèlement au sens de déplacement (52).

6. Machine-outil selon l'une quelconque des revendications précédentes, **caractérisée en ce qu'**un angle relatif entre le premier élément de pont (74) qui est maintenu sur le premier chariot pour pièce (48), et le deuxième élément de pont (78) qui est maintenu sur le deuxième chariot pour pièce (54), peut être réglé.

7. Machine-outil selon l'une quelconque des revendications précédentes, **caractérisée en ce que** le dispositif de liaison (92 ; 150 ; 174) présente au moins un élément à pointe mobile (106 ; 152 ; 176) qui est enfoncé dans un logement (104) associé.

8. Machine-outil selon la revendication 7, **caractérisée en ce que** le premier élément de pont (74) du premier chariot pour pièce (48) et le deuxième élément de pont (78) du deuxième chariot pour pièce (54) peuvent être serrés l'un avec l'autre par au moins un élément à pointe (106 ; 152 ; 176).

9. Machine-outil selon la revendication 8, **caractérisée en ce qu'**un dispositif à ressort (138 ; 156) est associé au moins à un élément à pointe (106 ; 152 ; 176) pour l'établissement d'une liaison par serrage.

10. Machine-outil selon la revendication 9, **caractérisée en ce que** le dispositif à ressort (138 ; 156) est disposé et réalisé de sorte que le premier élément de pont (74) et le deuxième élément de pont (78) soient pressés l'un contre l'autre par au moins un élément à pointe (106 ; 152 ; 176).

11. Machine-outil selon l'une quelconque des revendications 7 à 10, **caractérisée par** un dispositif de mise sous pression (132) pour la compression d'au moins un élément à pointe (106 ; 152 ; 176) dans le sens inverse de serrage.

12. Machine-outil selon la revendication 11, **caractérisée en ce qu'**au moins un élément à pointe (106 ; 152 ; 176) loge sur un piston (126 ; 154).

13. Machine-outil selon la revendication 12, **caractérisée en ce que** le dispositif à ressort (138 ; 156) loge entre le piston (126 ; 154) et une surface d'appui (136), par rapport à laquelle au moins un élément à pointe (106 ; 152 ; 176) est mobile.

14. Machine-outil selon l'une quelconque des revendications 7 à 13, **caractérisée en ce qu'**au moins un élément à pointe (106) présente, sur une zone d'enfoncement dans le logement associé (104), un diamètre extérieur plus petit que le diamètre intérieur du logement (104), la différence relative permettant une possibilité de réglage de la position relative du premier chariot pour pièce (48) et du deuxième chariot pour pièce (54) dans le sens de déplacement (z) et/ou le réglage d'une position angulaire relative.

15. Machine-outil selon l'une quelconque des revendications 7 à 14, **caractérisée en ce qu'**un élément de mise sous pression (108) loge sur au moins un élément à pointe (106) pour le serrage du premier chariot pour pièce (48) et du deuxième chariot pour pièce (54).
